# EUROPEAN PATENT SPECIFICATION

(11) **EP 3 179 098 B1**
(45) Date of publication and mention of the grant of the patent: **05.09.2018**
(21) Application number: 16199693.9
(22) Date of filing: 18.11.2016
(51) Int. Cl.: F03D 13/10, F03D 13/20, E04H 12/08

(54) **METHOD OF ASSEMBLING WIND TURBINE TOWER**
VERFAHREN ZUR MONTAGE EINES WINDTURBINENTURMS
PROCÉDÉ D'ASSEMBLAGE D'UNE TOUR D'ÉOLIENNE

(30) Priority: 08.12.2015 JP 2015239225
(43) Date of publication of application: 14.06.2017
(73) Proprietor: Mitsubishi Heavy Industries, Ltd., Tokyo 108-8215 (JP)
(72) Inventor: Shiraishi, Yasuaki, Tokyo, 108-8215 (JP); Yokoyama, Hiroaki, Tokyo, 108-8215 (JP); Takeuchi, Ryosuke, Hyogo, 652-0863 (JP); Teramoto, Naoto, Nagasaki, 850-0063 (JP)
(74) Representative: Henkel, Breuer & Partner

(56) References cited:
- EP-A1- 2 754 783
- WO-A1-2012/075607
- WO-A1-2014/075687
- US-A1- 2012 049 529
- US-A1- 2013 186 013

## Description

### TECHNICAL FIELD

The present disclosure relates to a method of assembling a wind turbine tower.

### BACKGROUND ART

A wind-turbine tower of a wind turbine power generating apparatus or the like may be assembled by coupling a plurality of tower sections that constitute a wind-turbine tower.

For instance, JP2013-19207A discloses a wind turbine power generating apparatus including a tower having a structure combining a plurality of sections. The tower is divided into two sections, an upper section and a lower section, at an intermediate part in the height direction. The upper section and the lower section of the tower are coupled via a flange structure. Specifically, the tower is assembled by fastening a flange formed protruding inward and outward in the radial direction from a lower end portion of the upper section of the tower and a flange formed protruding inward and outward in the radial direction from an upper end portion of the lower section of the tower with bolts and nuts.

US 2013/0186013A1 discloses a method of assembling a wind turbine tower wherein an upper tower section is raised by a lifting system such that a bottom portion of the upper tower section is brought in contact with the top portion of a lower tower section. Then, the contacted end portions of the lower and upper tower sections are joined with two lap welds on inner and outer sides of the. The profile of the tower sections is such that the outside diameter and shape of the bottom portion of the tower section being lifted is designed to match the inside diameter and shape of the top portion of the previously erected tower section so that the bottom and top end portions of the tower sections fit together to create an overlap and the bottom portion of the second tower section remains inside the first tower section.

WO 2012/075607A1 discloses an assembling method of tower sections of a wind turbine tower that is based on threaded connections. An upper section is suspended in a substantially vertical orientation above a lower section and is gradually lowered toward the lower section until a flange on a lower end of the upper section is seated on a flange on the upper end of the lower section. Then, bolts are inserted through mating holes of the flanges that are in contact with each other.

### SUMMARY

Meanwhile, as a coupling structure between tower sections that constitute a wind-turbine tower, weld joint may be employed instead of the flange coupling disclosed in JP2013-19207 A.

For instance, if the coupling part between tower sections has such a large diameter due to size increase of a wind-turbine tower that it is difficult to manufacture flanges to be formed on end portions of the tower sections, the end portions of the tower sections may be connected by welding.

If the tower sections are to be connected by welding, the end portions of the tower sections need to be positioned accurately with respect to each other to ensure reliable welding.

In view of the above, an object of at least one embodiment of the present invention is to provide a method of assembling a wind-turbine tower whereby it is possible to weld tower sections reliably.
(1) A method of assembling a wind-turbine tower which comprises a plurality of tower sections including a lower section and an upper section, according to the present invention comprises the features of claim 1, including: a step of suspending the upper section above the lower section while the lower section is disposed upright so that an upper end portion of the lower section and a lower end portion of the upper section face each other; a step of moving the upper section toward the lower section in an upward-and-downward direction to adjust a clearance between the lower end portion of the upper section and the upper end portion of the lower section to be within a predetermined range, while a protruding portion disposed on either one of the lower end portion of the upper section or the upper end portion of the lower section is engaged with a receiving portion disposed on the other one of the lower end portion of the upper section or the upper end portion of the lower section; and a step of joining the lower end portion of the upper section and the upper end portion of the lower section by welding.
   According to the above method (1), the upper section is moved in an upward-and-downward direction relative to the lower section standing upright, while the protruding portion disposed on either one of the lower end portion of the upper section or the upper end portion of the lower section is in engagement with the receiving portion disposed on the other one of the lower end portion of the upper section or the upper end portion of the lower section. That is, the upper section is moved in the upward-and-downward direction relative to the lower section while movement of the upper section is restricted in the radial direction or in the circumferential direction of the lower section (i.e. the radial direction or the circumferential direction of the wind-turbine tower) by the protruding portions that are in engagement with the receiving portions, and thus the clearance (root gap) between the lower end portion of the upper section and the upper end portion of the lower section can be readily adjusted to be within a predetermined range. Accordingly, it is possible to weld the lower end portion of the upper section and the upper end portion of the lower section reliably.
(2) In some embodiments, in the above method (1), the lower section includes a ring flange extending along a circumferential direction of the wind-turbine tower so as to protrude from an inner peripheral wall surface of the lower section inward in a radial direction of the wind-turbine tower. A spacer is interposed between the ring flange and either one of the protruding portion or the receiving portion disposed on the upper section so that a weight of the upper section is received by the ring flange of the lower section via the spacer and the clearance is maintained constant within the predetermined range.
   According to the above method (2), the ring flange disposed on the lower section is used to receive the weight of the upper section via the spacer between the upper section and the lower section. Herein, the ring flange is disposed along the circumferential direction and protruding inward in the radial direction from the inner peripheral wall surface of the lower section, and thus has a rigidity to bear the weight of the upper section. Accordingly, it is possible to transmit the weight of the upper section smoothly to a tower shell via the spacer and the ring flange, and to maintain the clearance between the lower end portion of the upper section and the upper end portion of the lower section stably.
(3) In some embodiments, in the above method (1) or (2), the clearance is adjusted by operating a first actuator for pushing up either one of the protruding portion or the receiving portion disposed on the upper section.
   According to the above method (3), the first actuator pushes up the upper section against the weight of the upper section, and thereby it is possible to accurately adjust the clearance between the lower end portion of the upper section and the upper end portion of the lower section.
   Furthermore, according to the above method (3), the first actuator is not particularly limited as long as the first actuator is capable of generating a force to bear the weight of the upper section, and thus it is possible to employ a simple actuator such as a vertical jack as the first actuator.
(4) In some embodiments, in any one of the above methods (1) to (3), the clearance is adjusted by adjusting a thickness of a shim to be inserted between a bottom portion of the receiving portion and a tip portion of the protruding portion.
   According to the above method (4), the thickness of the shim to be inserted between the bottom portion of the receiving portion and the tip portion of the protruding portion may be adjusted, and thereby it is possible to adjust the clearance between the lower end portion of the upper section and the upper end portion of the lower section appropriately in the upward-and-downward direction.
(5) In some embodiments, in any one of the above methods (1) to (4), the method further comprises, after the step of adjusting the clearance and before the step of joining, a step of reducing a misalignment amount between the lower end portion of the upper section and the upper end portion of the lower section in a radial direction of the wind-turbine tower.
   According to the above method (5), the clearance between the lower end portion of the upper section and the upper end portion of the lower section is adjusted, and then the misalignment amount in the radial direction of the wind-turbine tower between the lower end portion of the upper section and the upper end portion of the lower section is reduced, before joining the lower end portion of the upper section and the upper end portion of the lower section by welding. Accordingly, it is possible to weld the lower end portion of the upper section and the upper end portion of the lower section more reliably.
(6) In some embodiments, in any one of the above methods (1) to (5), the method further comprises, after the step of adjusting the clearance and before the step of joining, a step of placing a splice plate on a first rib disposed on an inner peripheral wall surface of the upper section so as to extend in the upward-and-downward direction and on a second rib disposed on an inner peripheral wall surface of the lower section so as to extend in the upward-and-downward direction, and fastening the splice plate to the first rib and the second rib.
   According to the above method (6), the clearance between the lower end portion of the upper section and the upper end portion of the lower section is adjusted, and then the splice plate is fastened to the first rib and the second rib to fix the upper section to the lower section, before joining the lower end portion of the upper section and the upper end portion of the lower section by welding. Accordingly, it is possible to weld the lower end portion of the upper section and the upper end portion of the lower section more reliably.
(7) In some embodiments, in any one of the above methods (1) to (6), the protruding portion tapers toward a tip of the protruding portion.
   According to the above method (7), the protruding portion is tapered toward the tip of the protruding portion, so that the tip of the protruding portion is less likely to be in contact with the inlet of the receiving portion when the protruding portion is to be inserted into the receiving portion, and thereby it is possible to insert the protruding portion smoothly into the receiving portion. Furthermore, even if the tip or its periphery of the protruding portion comes into contact with the inlet of the receiving portion when the protruding portion is to be inserted into the receiving portion, the tapered tip of the protruding portion moves along the inlet of the receiving portion, and thereby it is possible to insert the protruding portion smoothly into the receiving portion. Thus, according to the above method (7), it is possible to engage the protruding portion smoothly with the receiving portion.
(8) In some embodiments, in the above method (7), a side surface of the protruding portion has a curved shape in a tip-side region where the protruding portion tapers toward the tip.
   According to the above method (8), a side surface of the protruding portion has a curved shape in a tip-side region where the protruding portion tapers toward the tip, and thereby it is possible to insert the protruding portion smoothly into the receiving portion even if the tip or its periphery of the protruding portion comes into contact with the inlet of the receiving portion when the protruding portion is to be inserted into the receiving portion. Thus, according to the above method (8), it is possible to bring the protruding portion more smoothly into engagement with the receiving portion.
(9) In some embodiments, in any one of the above methods (1) to (8), the receiving portion has an inlet width for receiving the protruding portion, and the inlet width increases toward an inlet end.
   According to the above method (9), the receiving portion has an inlet width for receiving the protruding portion, and the inlet width increases toward an inlet end, and thereby the tip of the protruding portion is unlikely to be in contact with the inlet of the receiving portion when the protruding portion is to be inserted into the receiving portion, which makes it possible to insert the protruding portion smoothly into the receiving portion. Furthermore, even if the tip or its periphery of the protruding portion comes into contact with the inlet of the receiving portion when the protruding portion is to be inserted into the receiving portion, the tip of the protruding portion moves along the inlet of the receiving portion having a width increasing toward the inlet end, and thereby it is possible to insert the protruding portion smoothly into the receiving portion. Thus, according to the above method (9), it is possible to engage the protruding portion smoothly with the receiving portion.
(10) In some embodiments, in any one of the above methods (1) to (9), at least one of the protruding portion or the receiving portion is covered with a sliding material which has a smaller friction coefficient than a constituent material of the at least one of the protruding portion or the receiving portion.
   According to the above method (10), at least one of the protruding portion or the receiving portion is covered with a sliding material that has a smaller friction coefficient than the constituent material of the at least one of the protruding portion or the receiving portion, and thereby the protruding portion and the receiving portion are more slidable on each other even if the protruding portion and the receiving portion come in to contact when the protruding portion is to be inserted into the receiving portion. Thus, according to the above method (10), it is possible to engage the protruding portion more smoothly with the receiving portion.
(11) In some embodiments, in any one of the above methods (1) to (10), at least one of the protruding portion or the receiving portion has a cutout portion of a curved shape which has an opening toward a welding joint portion between the upper end portion and the lower end portion to form a fillet at the welding joint portion.
   According to the above method (11), at least one of the protruding portion or the receiving portion has a cutout portion of a curved shape that has an opening that faces a welding joint portion between the upper end portion and the lower end portion, and thereby it is possible to form a fillet at the welding joint portion with the cutout portion. In this way, it is possible to mitigate stress concentration at the welding joint portion between the upper end portion and the lower end portion joined by welding to improve the fatigue strength of the welding joint portion.
(12) In some embodiments, in any one of the above methods (1) to (11), the method further comprises, before the step of adjusting the clearance, a step of applying a force in a radial direction of the wind-turbine tower to either one of the lower end portion of the upper section or the upper end portion of the lower section so as to change a diameter of the either one of the lower end portion of the upper section or the upper end portion of the lower section to be closer to a diameter of the other one of the lower end portion of the upper section or the upper end portion of the lower section, in the radial direction.
   According to the above method (12), before the step of adjusting the clearance, a force in a radial direction of the wind-turbine tower is applied to either one of the lower end portion of the upper section or the upper end portion of the lower section so as to reduce change a diameter of the either one of the lower end portion of the upper section or the upper end portion of the lower section to be closer to a diameter of the other one of the lower end portion of the upper section or the upper end portion of the lower section, in the radial direction. Accordingly, the diameter of the lower end portion of the upper section and the diameter of the upper end portion of the lower section get closer in the radial direction of the wind-turbine tower, and thereby it is possible to bring the protruding portion and the receiving portion into engagement more smoothly in the step of adjusting the clearance.
(13) In some embodiments, in any one of the above methods (1) to (12), the method further comprises, before the step of adjusting the clearance, a step of revolving the upper section relative to the lower section so that a position of the protruding portion becomes the same as a position of the receiving portion corresponding to the protruding portion in a circumferential direction.
   According to the above method (13), before the step of adjusting the clearance, the upper section is revolved (turned) relative to the lower section so that the position of the protruding portion becomes the same as the position of the receiving portion corresponding to the protruding portion in the circumferential direction, and thereby it is possible to bring the protruding portion and the receiving portion into engagement more smoothly in the step of adjusting the clearance.
(14) In some embodiments, in the above method (13), a chain block is mounted to the upper section, and the chain block is used to revolve the upper section relative to the lower section.
   According to the above method (14), it is possible to revolve (turn) the upper section relative to the lower section with a simple configuration including a chain block to set the protruding portion and the receiving portion in the same positions in the circumferential direction, and thereby it is possible to bring the protruding portion and the receiving portion into engagement more smoothly in the step of adjusting the clearance.
(15) In some embodiments, in any one of the above methods (1) to (14), the step of joining comprises performing automatic welding along a welding line between the upper end portion and the lower end portion by using an automatic welding machine.
   According to the above method (15), an automatic welding machine is used to perform automatic welding along a welding line between the upper end portion and the lower end portion, and thereby it is possible to perform high-quality welding with a high efficiency.

According to at least one embodiment of the present invention, it is possible to provide a method of assembling a wind-turbine tower whereby it is possible to weld tower sections reliably.

### BRIEF DESCRIPTION OF DRAWINGS

FIG. 1 is a schematic diagram of a configuration example of a wind turbine provided with a wind-turbine tower assembled by a method of assembling a wind-turbine tower according to an embodiment.
FIG. 2 is a flowchart schematically showing a method of assembling a wind-turbine tower according to an embodiment.
FIG. 3A is a bottom view of an upper section.
FIG. 3B is a view of a lower end portion of an upper section as seen outward in the radial direction.
FIG. 4A is a top view of a lower section.
FIG. 4B is a view of an upper end portion of a lower section as seen outward in the radial direction.
FIG. 5 is a diagram for describing a step of positioning a lower section and an upper section to face each other.
FIGs. 6A to 6C are diagrams of a protruding portion and a receiving portion according to an embodiment.
FIG. 7 is a diagram for describing a step of adjusting an amount of misalignment.
FIG. 8 is a diagram of a connecting section between an upper section and a lower section.
FIG. 9 is a diagram of an upper section and an oval adjustment device according to an embodiment.
FIGs. 10 to 13 are diagrams each showing a protruding portion and a receiving portion according to an embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

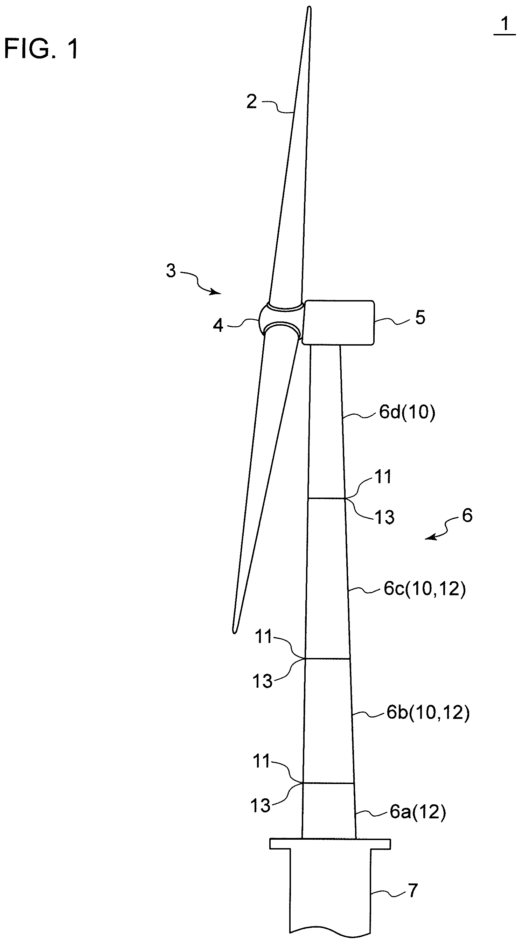

FIG. 1 is a schematic diagram of a configuration example of a wind turbine provided with a wind-turbine tower assembled by a method of assembling a wind-turbine tower according to an embodiment. As depicted in the drawing, a wind turbine 1 includes a rotor 3 including at least one blade 2 and a hub 4, a nacelle 5 supporting the rotor 3, and a wind-turbine tower 6 supporting the nacelle 5. The wind-turbine tower 6 may be disposed on a base structure 7 disposed on water or on land. The base structure 7 may be a foundation structure disposed on water or on land, or a floating structure on water.

The wind turbine 1 may constitute a wind turbine power generating apparatus. In this case, the nacelle 5 may house a generator driven by rotational energy of the rotor 3, a drive train for transmitting rotational energy of the rotor 3 to the generator, or the like.

The wind-turbine tower 6 includes a plurality of tower sections. In the wind turbine 1 depicted in FIG. 1, the wind-turbine tower 6 includes four tower sections 6a to 6d. The tower sections 6a to 6d are disposed along an upward-and-downward direction (i.e., the vertical direction), and in each pair of sections disposed adjacently in the upward-and-downward direction, a lower end portion 11 of an upper section 10 disposed above and an upper end portion 13 of a lower section 12 disposed below are connected to each other to form the single wind-turbine tower 6.

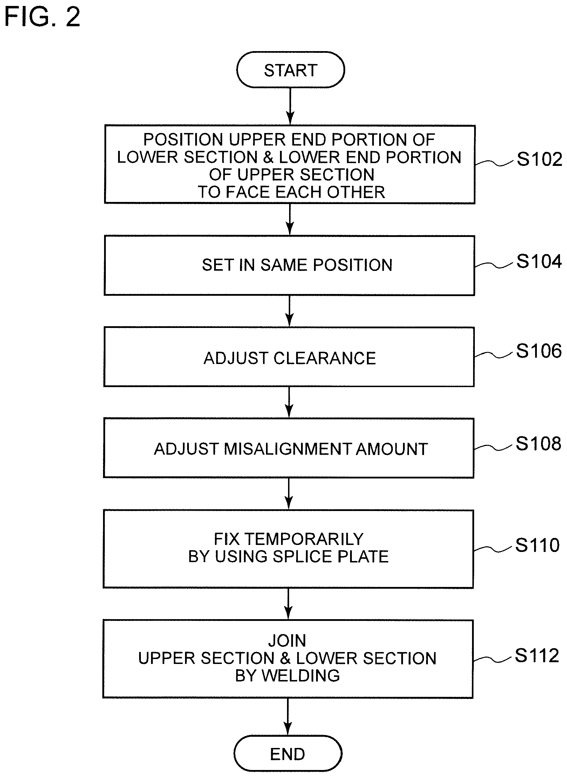

FIG. 2 is a flowchart schematically showing a method of assembling a wind-turbine tower according to an embodiment. As in the drawing, in an embodiment, the upper end portion 13 of the lower section 12 and the lower end portion 11 of the upper section 10 are positioned to face each other (S102), and the positions of the upper end portion 13 of the lower section 12 and the lower end portion 11 of the upper section 10 are the same in the circumferential direction (S104). The clearance and the amount of misalignment between the upper end portion 13 of the lower section 12 and the lower end portion 11 of the upper section 10 are adjusted (S106 and S108), the upper end portion 13 of the lower section 12 and the lower end portion 11 of the upper section 10 are fixed temporarily by using a splice plate described below (S110), and the upper end portion 13 of the lower section 12 and the lower end portion 11 of the upper section 10 are joined by welding (S112).

It should be noted that the aforementioned steps S104, S108, and S110 are optional, and performed if needed.

Furthermore, if the method of assembling a wind-turbine tower according to the present embodiment is to be applied to the wind turbine 1 depicted in FIG. 1, the method according to the present embodiment can be applied to connection of at least one pair of tower sections disposed adjacent to each other in the upward-and-downward direction from among the four tower sections 6a to 6d constituting the wind-turbine tower 6 (i.e., the tower sections 6a and 6b, 6b and 6c, or 6c and 6d).

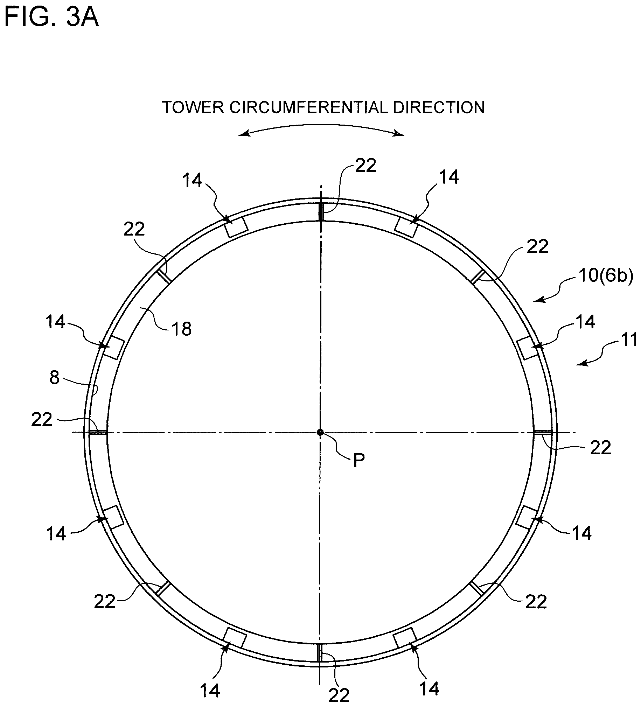

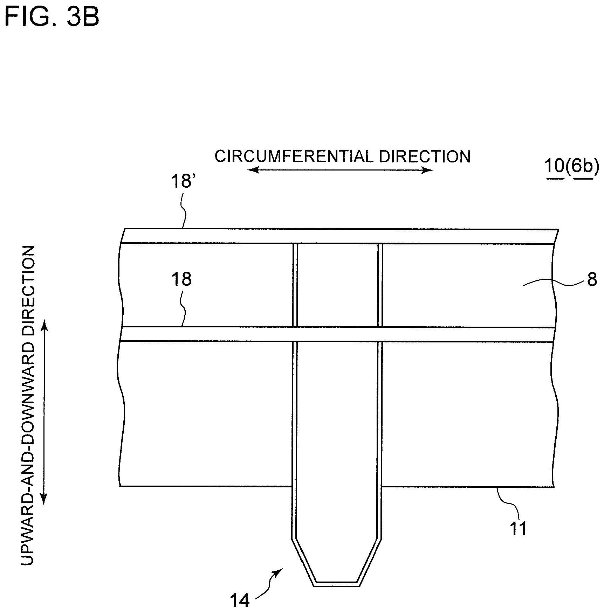

Described in detail below with reference to FIGs. 3 to 13 are steps of the method of assembling the wind-turbine tower depicted in the flowchart of FIG. 2. In the example described below, the tower section 6b is referred to as the upper section 10, and the tower section 6a as the lower section 12.

FIGs. 3 to 13 are each a diagram for describing a method of assembling a wind-turbine tower according to an embodiment.

First, before describing the steps, the configuration of the upper section 10 and the lower section 12 for applying the method of assembling a wind-turbine tower according to an embodiment will be described.

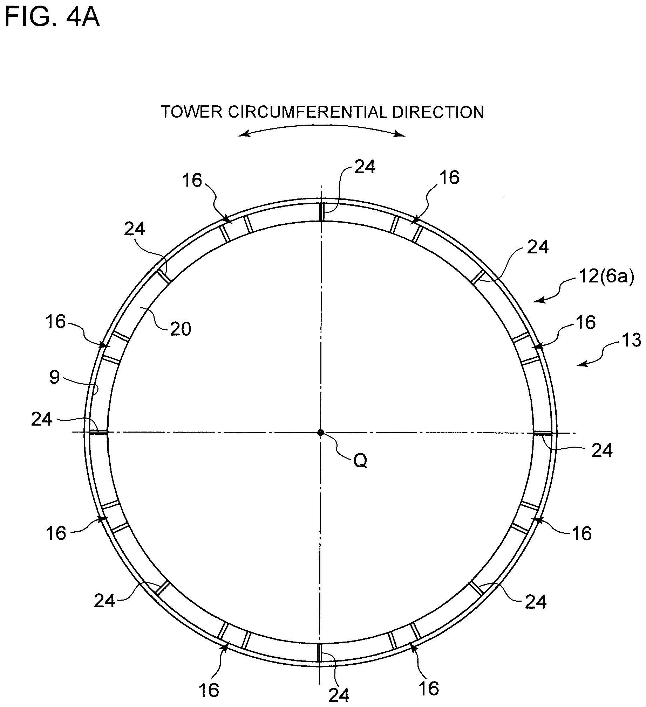

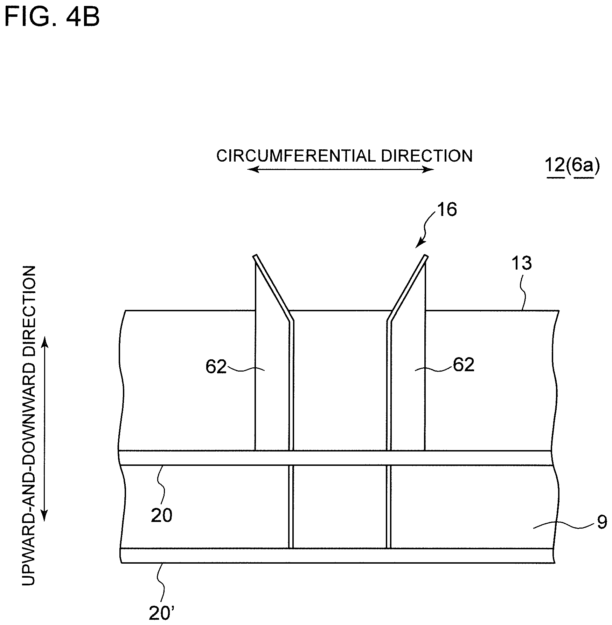

FIG. 3A is a bottom view of the upper section 10 (tower section 6b). FIG. 3B is a view of the lower end portion 11 of the upper section 10 as seen outward in the radial direction from inside the upper section 10. FIG. 4A is a top view of the lower section 12 (tower section 6a). FIG. 4B is a view of the upper end portion 13 of the lower section 12 as seen outward from inside the lower section 12.

As depicted in FIGs. 3A and 3B, the lower end portion 11 of the upper section 10 has a protruding portion 14.

The upper section 10 includes a ring flange 18 formed along the circumferential direction of the wind-turbine tower 6 (i.e. the circumferential direction of the upper section 10) so as to protrude inward in the radial direction of the wind-turbine tower 6 (i.e., inward in the radial direction of the upper section 10) from an inner peripheral wall surface 8 of the upper section 10, and the protruding portion 14 is disposed so as to protrude downward in the vertical direction from the ring flange 18.

A plurality of ring flanges may be disposed on the lower end portion 11 of the upper section 10. For example, a ring flange 18' may be provided in addition to the ring flange 18, as depicted in FIG. 3B.

Furthermore, as depicted in FIGs. 4A and 4B, the upper end portion 13 of the lower section 12 includes a receiving portion 16 engageable with the protruding portion 14.

The lower section 12 includes a ring flange 20 formed along the circumferential direction of the wind-turbine tower 6 (i.e. the circumferential direction of the lower section 12) so as to protrude inward in the radial direction of the wind-turbine tower 6 (i.e., inward in the radial direction of the lower section 12) from an inner peripheral wall surface 9 of the lower section 12. The receiving portion 16 has an upward opening in the vertical direction disposed above the ring flange 20.

The receiving portion 16 depicted in FIG. 4B may include a reinforcement member (rib 62 depicted in FIG. 4B) for reinforcing the receiving portion 16.

A plurality of ring flanges may be disposed on the upper end portion 13 of the lower section 12. For example, a ring flange 20' may be provided in addition to the ring flange 20, as depicted in FIG. 4B.

A plurality of protruding portions 14 and receiving portions 16 may be provided. In the present embodiment, as depicted in FIGs. 3A and 4A, the protruding portions 14 are disposed on eight positions at intervals of 45° in the circumferential direction about the center axis P of the upper section 10 (tower section 6b), while the receiving portions 16 are disposed on eight positions at intervals of 45° in the circumferential direction about the center axis Q of the lower section 12 (tower section 6a).

Furthermore, the upper section 10 includes first ribs 22 extending in the upward-and-downward direction on the inner peripheral wall surface 8, while the lower section 12 includes second ribs 24 extending in the upward-and-downward direction on the inner peripheral wall surface 9.

The first ribs 22 and the second ribs 24 are disposed spaced from the protruding portions 14 and the receiving portions 16, respectively, in the circumferential direction.

In some embodiments, the protruding portions 14 may be disposed on the upper end portion 13 of the lower section 12, and the receiving portions 16 engageable with the protruding portions 14 may be disposed on the lower end portion 11 of the upper section 10.

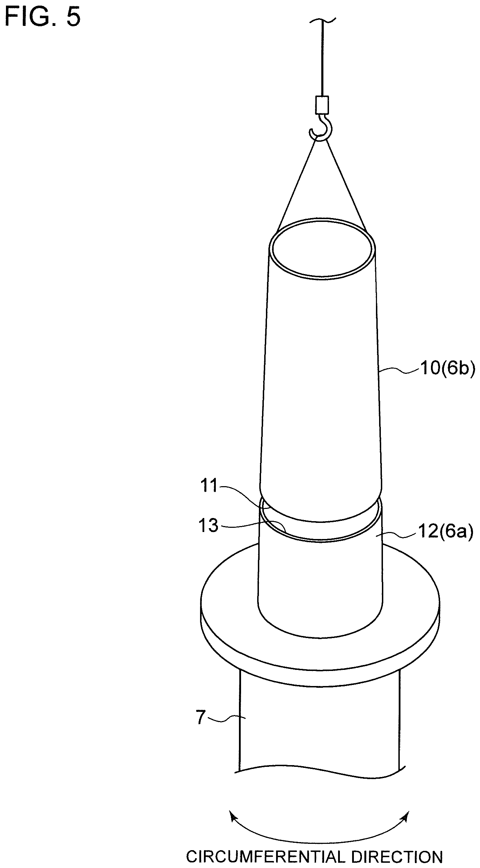

In step S102, as depicted in FIG. 5, while the lower section 12 (tower section 6a) is disposed upright, the upper section 10 (tower section 6b) is suspended above the lower section 12 by using a crane or the like, and the upper end portion 13 of the lower section 12 and the lower end portion 11 of the upper section 10 are positioned to face each other.

In step S104, the upper section 10 is rotated in the circumferential direction relative to the lower section 12 so that the positions of the protruding portions 14 coincide with the positions of the corresponding receiving portions 16 in the circumferential direction. At this time, the upper section 10 may be provided with a chain block, and the upper section 10 may be revolved (turned) relative to the lower section 12 by using the chain block.

It should be noted that step S104 does not need to be performed if the protruding portions 14 are already in the same positions as the corresponding receiving portions 16 in the circumferential direction when the upper end portion 13 of the lower section 12 and the lower end portion 11 of the upper section 10 are positioned to face each other in step S102.

In step S106, while the protruding portions 14 disposed on the lower end portion 11 of the upper section 10 are in engagement with the receiving portions 16 disposed on the upper end portion 13 of the lower section 12, the upper section 10 is moved in the upward-and-downward direction with respect to the lower section 12, and clearance d_{g} (root gap) between the lower end portion 11 of the upper section 10 and the upper end portion 13 of the lower section 12, that is, the distance between the lower end portion 11 of the upper section 10 and the upper end portion 13 of the lower section 12 in the upward-and-downward direction, is adjusted to fall within a predetermined range.

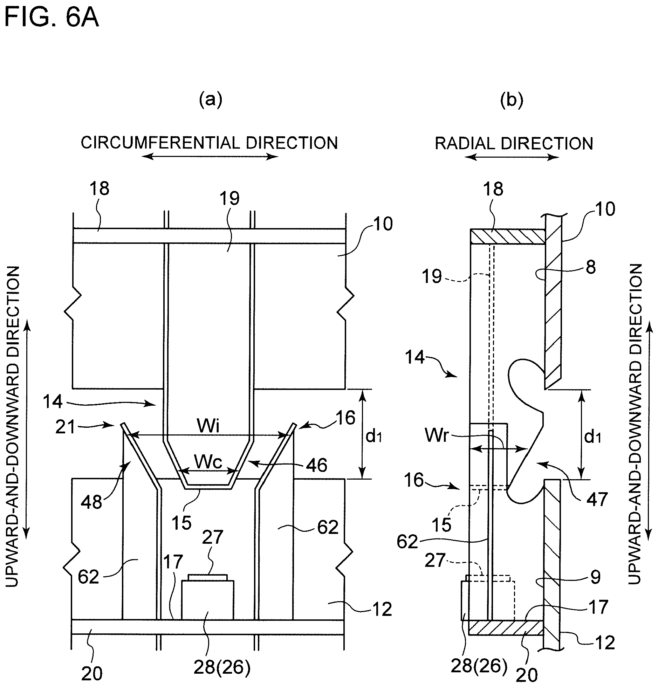

The above described step S106 will be described in more detail with reference to FIGs. 6A to 6C. FIGs. 6A to 6C are diagrams showing protruding portions and receiving portions according to an embodiment, and in each figure, (a) is a view as seen outward in the radial direction of the wind-turbine tower 6 (i.e., the radial direction of the upper section 10 or the lower section 12), and (b) is a view as seen along the circumferential direction of the wind-turbine tower.

After steps S102 and S104, while the protruding portions 14 are in the same positions as the corresponding receiving portions 16 in the circumferential direction, the upper section 10 is moved down while being suspended by a crane or the like, and the protruding portions 14 are brought into engagement with the receiving portions 16 as depicted in FIG. 6A. In the situation depicted in FIG. 6A, the distance between the lower end portion 11 of the upper section 10 and the upper end portion 13 of the lower section 12 is d₁.

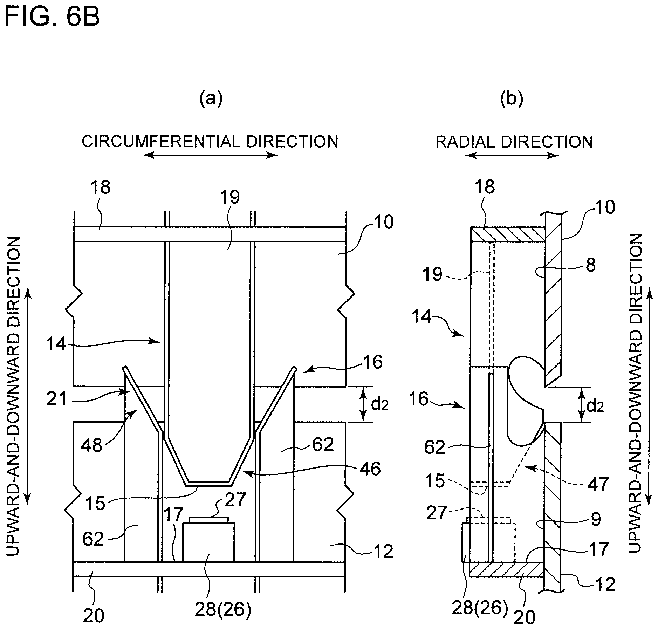

Then, while the protruding portions 14 are in engagement with the receiving portions 16, the upper section 10 is moved down further, and the lower end portion 11 of the upper section 10 and the upper end portion 13 of the lower section 12 are brought even more closer to each other as depicted in FIG. 6B. In the situation depicted in FIG. 6B, the distance between the lower end portion 11 of the upper section 10 and the upper end portion 13 of the lower section 12 is d₂.

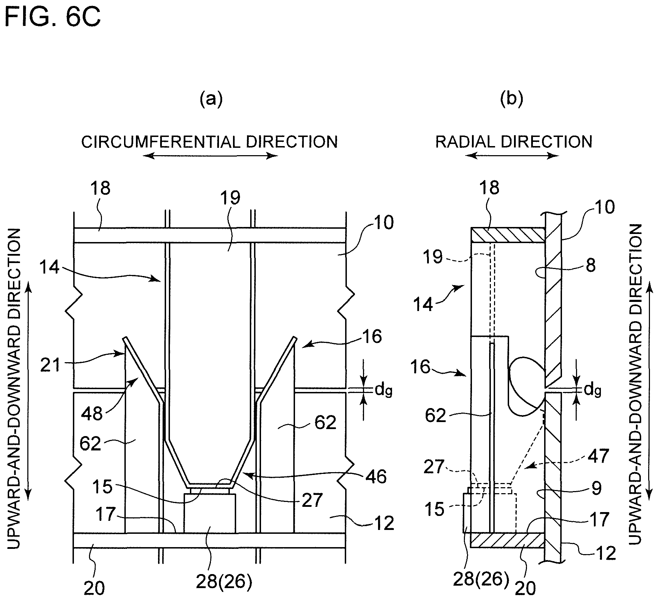

While the protruding portions 14 are in engagement with the receiving portions 16, the upper section 10 is moved in the upward-and-downward direction with respect to the lower section 12 by using a crane or another device, and clearance d_{g} between the lower end portion 11 of the upper section 10 and the upper end portion 13 of the lower section 12 is adjusted to be within a predetermined range (see FIG. 6C). The clearance d_{g} is a root gap for welding the lower end portion 11 of the upper section 10 and the upper end portion 13 of the lower section 12. In other words, in step S106, the clearance d_{g} between the lower end portion 11 of the upper section 10 and the upper end portion 13 of the lower section 12 is adjusted to a value appropriate for welding the lower end portion 11 of the upper section 10 and the upper end portion 13 of the lower section 12.

As depicted in FIG. 6C, a spacer 26 may be disposed between a protruding portion 14 disposed on the upper section 10 and the ring flange 20 of the lower section 12, and a tip portion 15 of the protruding portion 14 may be received by an upper surface 27 of the spacer 26, to adjust the clearance d_{g} between the lower end portion 11 of the upper section 10 and the upper end portion 13 of the lower section 12 to be within a predetermined range.

Alternatively, the weight of the upper section 10 may be received by the ring flange 20 of the lower section 12 via the spacer 26 to maintain the clearance d_{g} within a predetermined range.

The ring flange 20 of the lower section 12 is disposed along the circumferential direction so as to protrude inward in the radial direction from the inner peripheral wall surface 9 of the lower section 12, and thus has a rigidity to bear the weight of the upper section 10. Accordingly, it is possible to transmit the weight of the upper section 10 smoothly to a tower shell via the spacer 26 and the ring flange 20, and to maintain the clearance d_{g} between the lower end portion 11 of the upper section 10 and the upper end portion 13 of the lower section 12 stably.

Furthermore, as depicted in FIG. 6C, the protruding portion 14 is disposed so as to protrude downward in the vertical direction from the ring flange 18 disposed along the circumferential direction so as to protrude inward in the radial direction from the inner peripheral wall surface 8 of the upper section 10. Accordingly, it is possible to transmit a reaction force that the protruding portion 14 receives from the spacer 26 smoothly to a tower shell via the ring flange 18, and to maintain the clearance d_{g} between the lower end portion 11 of the upper section 10 and the upper end portion 1 3 of the lower section 12 even more stably.

As depicted in FIGs. 6A to 6C, the protruding portion 14 may include a support plate 19 extending along the upward-and-downward direction. With the protruding portion 14 including the support plate 19, the rigidity of the protruding portion 14 is enhanced, so that the protruding portion 14 can bear a larger force (e.g. a reaction force from a vertical jack 28 described below).

In the example depicted in FIGs. 6A to 6C, a vertical jack 28 (first actuator) is employed as the spacer 26. In this case, the upper section 10 is moved downward by a crane or the like, the protruding portion 14 is placed on the upper surface 27 of the vertical jack 28, and the weight of the upper section 10 is received by the lower section 12 via the vertical jack 28 and the ring flange 20. After such conditions are satisfied, the vertical jack 28 pushes up the upper section 10 against the weight of the upper section 10, and thereby the clearance d_{g} is adjusted. Accordingly, it is possible to adjust the clearance d_{g} between the lower end portion 11 of the upper section 10 and the upper end portion 13 of the lower section 12 accurately.

In some embodiments, a shim may be used as the spacer 26, and the thickness of the shim to be inserted between a bottom portion 17 of the receiving portion 16 and a tip portion 15 of the protruding portion 14 may be adjusted to adjust the clearance d_{g} between the lower end portion 11 of the upper section 10 and the upper end portion 13 of the lower section 12.

In step S108, after the clearance d_{g} is adjusted in step S106, the misalignment amount "m" in the radial direction of the wind-turbine tower 6 between the lower end portion 11 of the upper section 10 and the upper end portion 13 of the lower section 12 is reduced.

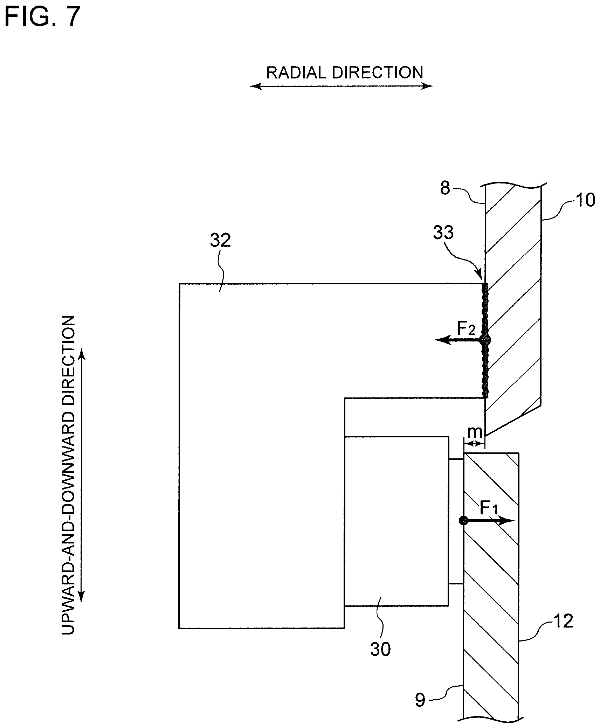

A misalignment amount herein refers to the distance between reference surfaces in welding. In the example depicted in FIG. 7, a misalignment amount corresponds to the distance m in the radial direction between the inner peripheral wall surface 8 at the lower end portion 11 of the upper section 10 and the inner peripheral wall surface 9 at the upper end portion 13 of the lower section 12.

For instance, as depicted in FIG. 7, if the upper end portion 13 of the lower section 12 is disposed inside the lower end portion 11 of the upper section 10 with respect to the radial direction, the misalignment amount m can be reduced by using a hydraulic jack 30.

In this case, for instance, the hydraulic jack 30 is disposed between a reaction wall 32 joined by welding to the inner peripheral wall surface 8 at the lower end portion 11 of the upper section 10 at a welding part 33 and the inner peripheral wall surface 9 at the upper end portion 13 of the lower section 12. The hydraulic jack 30 applies a force F₁ directed outward in the radial direction to the inner peripheral wall surface 9 at the upper end portion 13 of the lower section 12, and a force F₂ directed inward in the radial direction based on a reaction force of F₁ to the inner peripheral wall surface 9 at the upper end portion 13 of the lower section 12 via the reaction wall 32. Accordingly, the upper end portion 13 of the lower section 12 is moved outward in the radial direction, and the lower end portion 11 of the upper section 10 is moved inward in the radial direction, and thereby the misalignment amount m is reduced.

Furthermore, a strong back (not depicted) may be joined by welding to the lower end portion 11 of the upper section 10 and the upper end portion 13 of the lower section 12 to partially connect the lower end portion 11 of the upper section 10 and the upper end portion 13 of the lower section 12, so as to maintain the reduced misalignment amount after reducing the misalignment amount m in the radial direction between the lower end portion 11 of the upper section 10 and the upper end portion 13 of the lower section 12.

In step S110, a splice plate 34 is used to temporarily fix the upper end portion 13 of the lower section 12 and the lower end portion 11 of the upper section 10.

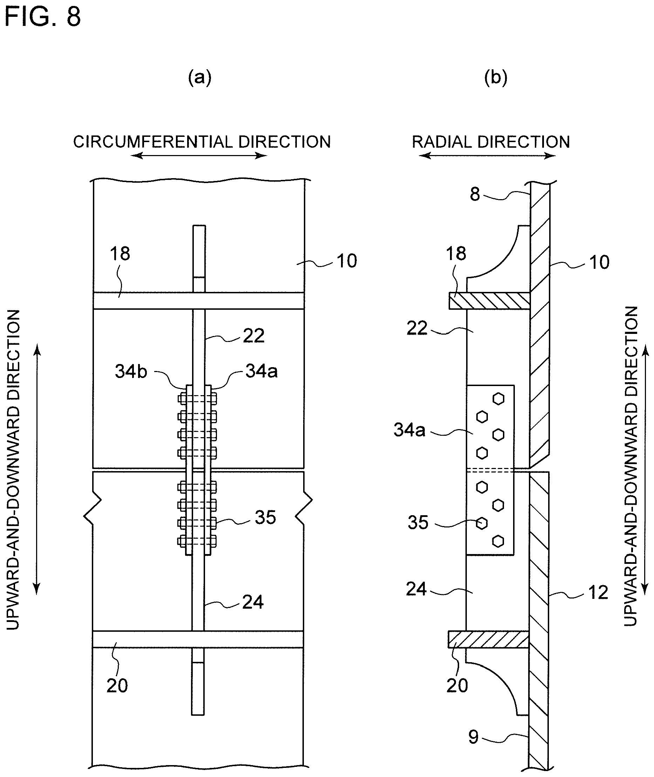

Herein, FIG. 8 is a diagram showing a joint section between the upper section 10 and the lower section 12 connected by the splice plate 34, where (a) is a view as seen outward in the radial direction of the wind-turbine tower 6 (i.e., the radial direction of the upper section 10 or the lower section 12), and (b) is a view as seen along the circumferential direction of the wind-turbine tower.

More specifically, in step S110, the splice plate 34 is placed on the first rib 22 extending in the upward-and-downward direction on the inner peripheral wall surface 8 of the upper section 10 and the second rib 24 extending in the upward-and-downward direction on the inner peripheral wall surface 9 of the lower section 12, and the splice plate 34 is fastened to the first rib 22 and the second rib 24.

In an embodiment, as depicted in FIG. 8, two splice plates 34a, 34b are placed so as to sandwich the first rib and the second rib disposed in the upward-and-downward direction from both sides in the circumferential direction. The splice plates 34a, 34b are fastened to the first rib 22 and the second rib 24 with bolts 35.

Accordingly, the splice plate 34 is fastened to the first rib 22 and the second rib 24 to fix the upper section 10 to the lower section 12 after the clearance d_{g} and/or the misalignment amount m are adjusted, and thereby the subsequent welding step can be performed more reliably.

In step S112, the lower end portion 11 of the upper section 10 and the upper end portion 13 of the lower section 12 are joined by welding.

In some embodiments, in step S112, the lower end portion 11 of the upper section 10 and the upper end portion 13 of the lower section 12 are joined by automatic welding. Specifically, an automatic welding machine is used to perform automatic welding along a welding line between the upper end portion 13 of the lower section 12 and the lower end portion 11 of the upper section 10.

In some embodiments, in step S112, the lower end portion 11 of the upper section 10 and the upper end portion 13 of the lower section 12 may be joined by manual welding by manpower.

Furthermore, in some embodiments, in step S112, the lower end portion 11 of the upper section 10 and the upper end portion 13 of the lower section 12 may be joined partly by automatic welding, and partly by manual welding.

According to the method of assembling a wind-turbine tower including the above described steps S102 to S112, the upper section 10 is moved in the upward-and-downward direction relative to the lower section 12 while restricting movement of the upper section 10 in the radial direction or the circumferential direction of the lower section 12 with the protruding portions 14 being in engagement with the receiving portions 16, and thus the clearance d_{g} between the lower end portion 11 of the upper section 10 and the upper end portion 13 of the lower section 12 can be readily adjusted to be within a predetermined range. Accordingly, it is possible to weld the lower end portion 11 of the upper section 10 and the upper end portion 13 of the lower section 12 reliably.

In some embodiments, before step S106 of adjusting the clearance d_{g}, oval adjustment between the lower end portion 11 of the upper section 10 and the upper end portion 13 of the lower section 12 may be performed. The oval adjustment may be performed by applying a force in the radial direction of the wind-turbine tower 6 to at least one of the lower end portion 11 of the upper section 10 or the upper end portion 13 of the lower section 12 so as to reduce a difference between the diameter of the lower end portion 11 of the upper section 10 and the diameter of the upper end portion 13 of the lower section 12.

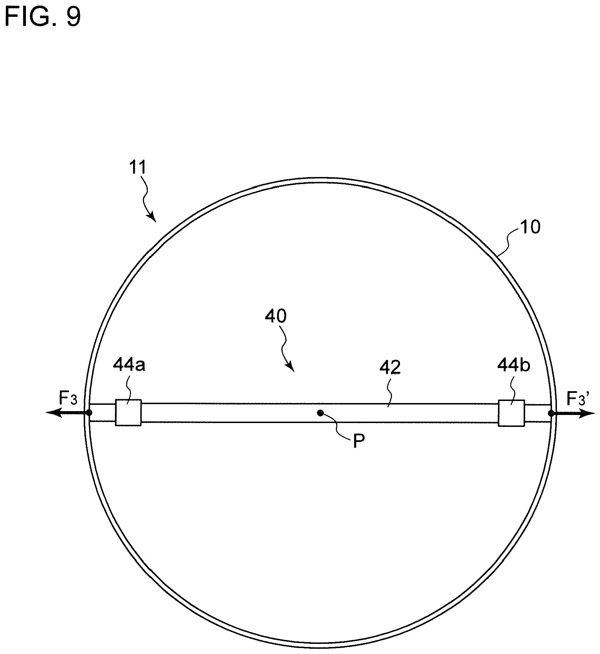

FIG. 9 is a diagram of the upper section 10 and an oval adjustment device according to an embodiment, as seen upward from below the upper section 10.

For instance, if a force directed outward in the radial direction of the wind-turbine tower 6 is to be applied to the lower end portion 11 of the upper section 10, an oval adjustment device 40 as depicted in FIG. 9 can be used.

The oval adjustment device 40 includes an intermediate rod 42 and a hydraulic jack 44 mounted to at least one of the end portions of the intermediate rod 42. In the oval adjustment device 40 depicted in FIG. 9, hydraulic jacks 44a, 44b are mounted to both of the end portions of the intermediate rod 42.

To apply a radially-outward force to the upper section 10, the intermediate rod 42 is oriented in the radial direction in which a force is to be applied, at the lower end portion 11 of the upper section 10, and the hydraulic jacks 44a, 44b are disposed between the intermediate rod 42 and a pair of points of application on the inner peripheral wall surface 8 on which the force is to be applied, respectively. The hydraulic jacks 44a, 44b apply forces F₃, F₃' directed outward in the radial direction to the respective points of application via the intermediate rod 42.

Accordingly, the diameter of the lower end portion 11 of the upper section 10 and the diameter of the upper end portion 13 of the lower section 12 get even closer to each other in the radial direction of the wind-turbine tower 6, and thereby it is possible to bring the protruding portions 14 into engagement with the receiving portions 16 smoothly in step S106 of adjusting the clearance d_{g}.

The step of performing oval adjustment maybe performed before or after the step S102 of positioning the upper end portion 13 of the lower section 12 and the lower end portion 11 of the upper section 10 to face each other.

In some embodiments, in the step of performing oval adjustment, an inward force in the radial direction of the wind-turbine tower 6 may be applied to the lower end portion 11 of the upper section 10 or the upper end portion 13 of the lower section 12.

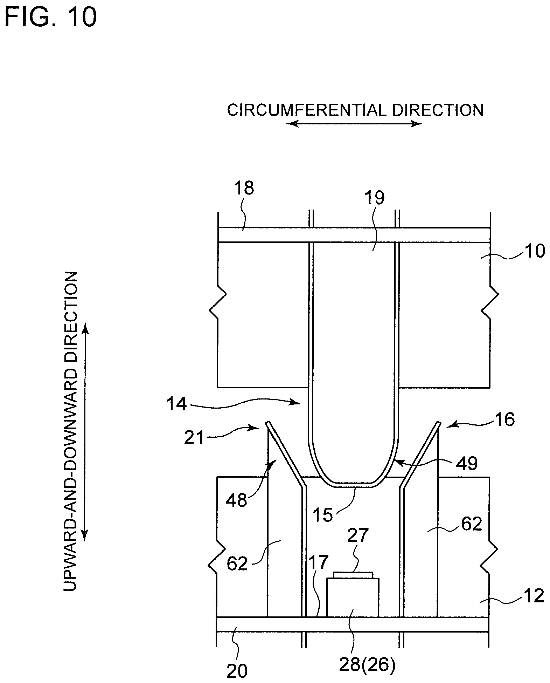

With reference to FIGs. 6A and 10 to 13, the features of the protruding portions 14 and the receiving portions 16 according to some embodiments will now be described. FIGs. 10 to 13 are each a diagram of a protruding portion and a receiving portion according to an embodiment.

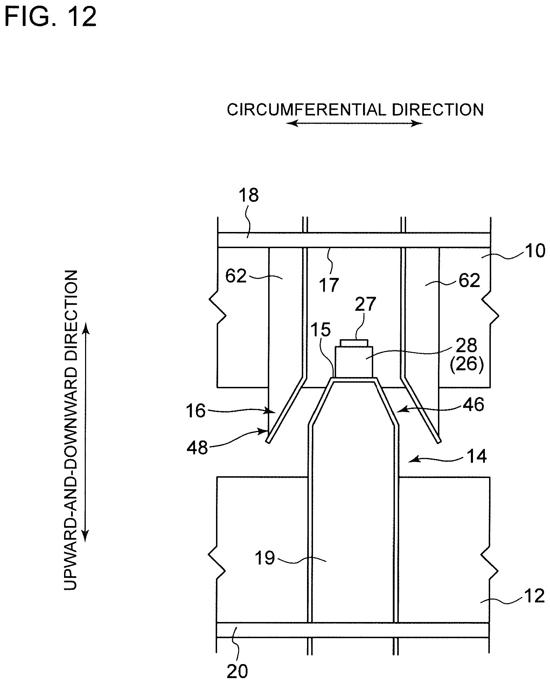

In the embodiments depicted in FIGs. 6A, 10, and 11, the protruding portions 14 are disposed on the lower end portion 11 of the upper section 10, and the receiving portions 16 are disposed on the upper end portion 13 of the lower section 12. On the other hand, in the embodiment depicted in FIG. 12, the protruding portions 14 are disposed on the upper end portion 13 of the lower section 12, and the receiving portions 16 are disposed on the lower end portion 11 of the upper section 10.

In some embodiments, the protruding portions 14 are tapered toward tips (tip portions 15).

In the example depicted in (a) of FIG. 6A and FIGs. 10 to 12, the protruding portion 14 has a tapered shape 46 with a width Wc along the circumferential direction decreasing toward the tip (tip portion 15) along the direction of the center axis (upward-and-downward direction).

Furthermore, in the example depicted in (b) of FIG. 6A, the protruding portion 14 has a tapered shape 47 with a width Wr along the radial direction decreasing toward the bottom portion 17 of the receiving portion 16 along the direction of the center axis.

In some embodiments, as depicted in FIGs. 6A and 10 to 12, the receiving portion 16 has a tapered shape 48 with an inlet width Wi for receiving the protruding portion 14 increasing toward an inlet end.

As described above, since the protruding portion 14 is tapered toward the tip, and/or since the receiving portion 16 has an inlet width for receiving the protruding portion 14 increasing toward the inlet end, the tip of the protruding portion 14 is less likely to be in contact with the inlet 21 of the receiving portion 16 when the protruding portion 14 is inserted into the receiving portion 16. Thus, it is possible to insert the protruding portion 14 smoothly into the receiving portion 16, and to bring the protruding portion 14 into engagement with the receiving portion 16 smoothly.

In some embodiments, as depicted in FIG. 10, the side surface 50 of the protruding portion 14 has a curved shape 49 in a tip-side region where the tapered shape 46 of the protruding portion 14 is disposed. In an embodiment depicted in FIG. 10, the curved shape 49 of the side surface 50 of the protruding portion 14 has a convex curved surface.

In this case, even if the tip or its periphery of the protruding portion 14 comes into contact with the inlet 21 of the receiving portion 16 when the protruding portion 14 is to be inserted into the receiving portion 16, the protruding portion 14 can be inserted more smoothly into the receiving portion 16, and thus it is possible to bring the protruding portion 14 more smoothly into engagement with the receiving portion 16.

In some embodiments, the side surface of the receiving portion 16 may have a curved shape in a region where the tapered shape 48 of the receiving portion 16 is disposed.

In this case, even if the tip or its periphery of the protruding portion 14 comes into contact with the inlet 21 of the receiving portion 16 when the protruding portion 14 is to be inserted into the receiving portion 16, the protruding portion 14 can be inserted more smoothly into the receiving portion 16, and thus it is possible to bring the protruding portion 14 more smoothly into engagement with the receiving portion 16.

In some embodiments, at least one of the protruding portion 14 or the receiving portion 16 is covered with a sliding material that has a smaller friction coefficient than the constituent material of the at least one of the protruding portion 14 or the receiving portion 16.

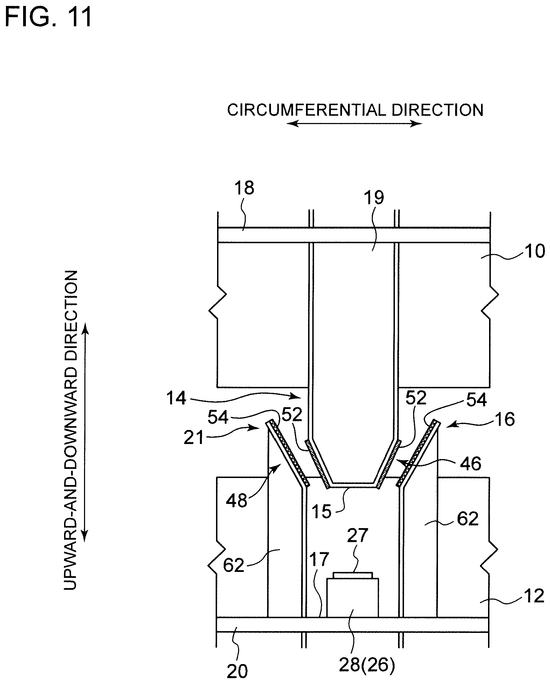

In an embodiment depicted in FIG. 11, the protruding portion 14 is covered with a fluoropolymer plate 52 that has a smaller friction coefficient than the constituent material (e.g. steel) of the protruding portion 14 in the tip-side region. Specifically, the fluoropolymer plate 52 being a sliding material is disposed on a section of the protruding portion 14 in the tip-side region that is likely to be in contact with the receiving portion 16 when the protruding portion 14 is brought into engagement with the receiving portion 16.

In the embodiment depicted in FIG. 11, the receiving portion 16 is covered with a stainless plate 54 that has a high sliding property with respect to a fluoropolymer material.

In this case, even if the protruding portion 14 comes into contact with the receiving portion 16 when the protruding portion 14 is to be inserted into the receiving portion 16, the protruding portion 14 and the receiving portion 16 are more slidable with respect to each other, and thus it is possible to bring the protruding portion 14 more smoothly into engagement with the receiving portion 16.

In some embodiments, at least one of the protruding portion 14 or the receiving portion 16 has a cutout portion 58 of a curved shape that has an opening toward a welding joint portion 56 between the upper end portion 13 and the lower end portion 11, and thereby forms a fillet 60 at the welding joint portion 56.

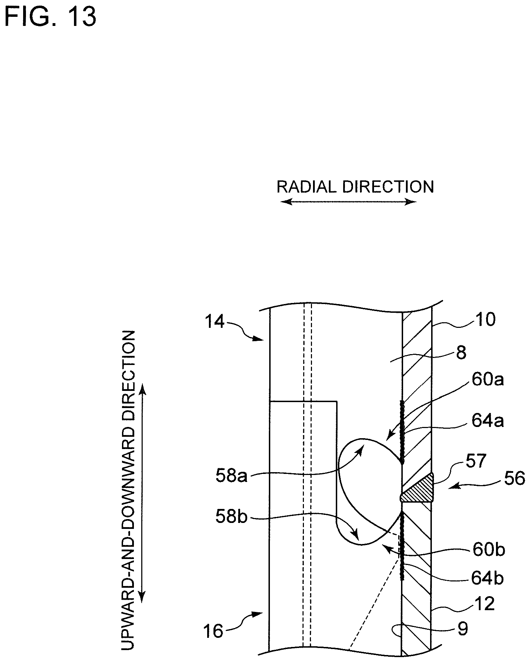

FIG. 13 is a diagram showing the protruding portion 14 and the receiving portion 16 after step S112 of welding is performed, where the lower end portion 11 of the upper section 10 and the upper end portion 13 of the lower section 12 are connected via weld metal 57 formed at the welding joint portion 56 in step S112 of welding.

In an embodiment depicted in FIG. 13, the protruding portion 14 has a cutout portion 58a of a curved shape that has an opening toward the welding joint portion 56 and forms a fillet 60a at the welding joint portion 56, while the receiving portion 16 has a cutout portion 58b of a curved shape that has an opening toward the welding joint portion 56 and forms a fillet 60b at the welding joint portion 56.

The fillet 60a is formed when the protruding portion 14 is provided by welding at the lower end portion 11 of the upper section 10. More specifically, the fillet 60a is formed by joining the protruding portion 14 and the inner peripheral wall surface 8 of the upper section 10 at a welding section 64a, and then trimming the shape of the cutout portion 58a with a grinder so that the cutout portion 58a and the inner peripheral wall surface 8 of the upper section 10 continue smoothly.

Similarly, the fillet 60b is formed when the receiving portion 16 is provided by welding at the upper end portion 13 of the lower section 12. More specifically, the fillet 60b is formed by joining the receiving portion 16 and the inner peripheral wall surface 9 of the lower section 12 at a welding section 64b, and then trimming the shape of the cutout portion 58b with a grinder so that the cutout portion 58b and the inner peripheral wall surface 9 of the lower section 12 continue smoothly.

By forming the above described fillet 60a or the fillet 60b, it is possible to mitigate stress concentration at the welding section 64a between the upper section 10 and the protruding portion 14, or at the welding section 64b between the lower section 12 and the receiving portion 16, thereby improving fatigue strength of the welding section 64a or the welding section 64b.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A method of assembling a wind-turbine tower (6) which comprises a plurality of tower sections (6a-d) including a lower section (12) and an upper section (10), the method comprising:
a step (S102) of suspending the upper section (10) above the lower section (12) while the lower section (12) is disposed upright so that an upper end portion (13) of the lower section (12) and a lower end portion (11) of the upper section (10) face each other;
a step (S106) of moving the upper section (10) toward the lower section (12) in an upward-and-downward direction to adjust a clearance (d_{g}) in the upward-and-downward direction between the lower end portion (11) of the upper section (10) and the upper end portion (13) of the lower section (12) to be within a predetermined range appropriate for welding, while a protruding portion (14) disposed on either one of the lower end portion (11) of the upper section (10) or the upper end portion (13) of the lower section (12) is engaged with a receiving portion (16) disposed on the other one of the lower end portion (11) of the upper section (10) or the upper end portion (13) of the lower section (12); and
a step (S112) of joining the lower end portion (11) of the upper section (10) and the upper end portion (13) of the lower section (12) by welding.

2. The method of assembling a wind-turbine tower (6) according to claim 1,
wherein the lower section (12) includes a ring flange (20) extending along a circumferential direction of the wind-turbine tower (6) so as to protrude from an inner peripheral wall surface (9) of the lower section (12) inward in a radial direction of the wind-turbine tower (6), and
wherein a spacer (26) is interposed between the ring flange (20) and either one of the protruding portion (14) or the receiving portion (16) disposed on the upper section (10) so that a weight of the upper section (10) is received by the ring flange (20) of the lower section (12) via the spacer (26) and the clearance (d_{g}) is maintained constant within the predetermined range.

3. The method of assembling a wind-turbine tower (6) according to claim 1 or 2, wherein the clearance (d_{g}) is adjusted by operating a first actuator (28) for pushing up either one of the protruding portion (14) or the receiving portion (16) disposed on the upper section (10).

4. The method of assembling a wind-turbine tower (6) according to any one of claims 1 to 3, wherein the clearance (d_{g}) is adjusted by adjusting a thickness of a shim to be inserted between a bottom portion (17) of the receiving portion (16) and a tip portion (15) of the protruding portion (14) .

5. The method of assembling a wind-turbine tower (6) according to any one of claims 1 to 4, further comprising, after the step (S106) of adjusting the clearance (d_{g}) and before the step (S112) of joining, a step (S108) of reducing a misalignment amount (m) between the lower end portion (11) of the upper section (10) and the upper end portion (13) of the lower section (12) in a radial direction of the wind-turbine tower (6).

6. The method of assembling a wind-turbine tower (6) according to any one of claims 1 to 5, further comprising, after the step (S106) of adjusting the clearance (d_{g}) and before the step (S112) of joining, a step (S110) of placing a splice plate (34) on a first rib (22) disposed on an inner peripheral wall surface (8) of the upper section (10) so as to extend in the upward-and-downward direction and on a second rib (24) disposed on an inner peripheral wall surface (9) of the lower section (12) so as to extend in the upward-and-downward direction, and fastening the splice plate (34) to the first rib (22) and the second rib (24).

7. The method of assembling a wind-turbine tower (6) according to any one of claims 1 to 6,
wherein the protruding portion (14) tapers toward a tip (15) of the protruding portion (14).

8. The method of assembling a wind-turbine tower (6) according to claim 7,
wherein a side surface of the protruding portion (14) has a curved shape (49) in a tip-side region where the protruding portion (14) tapers toward the tip (15).

9. The method of assembling a wind-turbine tower (6) according to any one of claims 1 to 8,
wherein the receiving portion (16) has an inlet width (Wi) for receiving the protruding portion (14), and the inlet width (Wi) increases toward an inlet end.

10. The method of assembling a wind-turbine tower (6) according to any one of claims 1 to 9,
wherein at least one of the protruding portion (14) or the receiving portion (16) is covered with a sliding material (52,54) which has a smaller friction coefficient than a constituent material of the at least one of the protruding portion (14) or the receiving portion (16).

11. The method of assembling a wind-turbine tower (6) according to any one of claims 1 to 10,
wherein at least one of the protruding portion (14) or the receiving portion (16) has a cutout portion (58) of a curved shape which has an opening toward a welding joint portion (56) between the upper end portion (13) and the lower end portion (11) to form a fillet (60) at the welding joint portion (56).

12. The method of assembling a wind-turbine tower (6) according to any one of claims 1 to 11, further comprising, before the step (S106) of adjusting the clearance (d_{g}), a step of applying a force in a radial direction of the wind-turbine tower (6) to either one of the lower end portion (11) of the upper section (10) or the upper end portion (13) of the lower section (12) so as to change a diameter of the either one of the lower end portion (11) of the upper section (10) or the upper end portion (13) of the lower section (12) to be closer to a diameter of the other one of the lower end portion (11) of the upper section (10) or the upper end portion (13) of the lower section (12), in the radial direction.

13. The method of assembling a wind-turbine tower (6) according to any one of claims 1 to 12, further comprising, before the step (S106) of adjusting the clearance (d_{g}), a step of revolving the upper section (10) relative to the lower section (12) so that a position of the protruding portion (14) becomes the same as a position of the receiving portion (16) corresponding to the protruding portion (14) in a circumferential direction.

14. The method of assembling a wind-turbine tower (6) according to claim 13, wherein a chain block is mounted to the upper section (10), and the chain block is used to revolve the upper section (10) relative to the lower section (12) .

15. The method of assembling a wind-turbine tower (6) according to any one of claims 1 to 14, wherein the step (S112) of joining comprises performing automatic welding along a welding line between the upper end portion (13) and the lower end portion (11) by using an automatic welding machine.

## Patentansprüche

1. Ein Verfahren zum Zusammenbauen eines Windturbinenturms (6), der eine Vielzahl von Turmsektionen (6a-d) einschließlich einer unteren Sektion (12) und einer oberen Sektion (10) aufweist, wobei das Verfahren umfasst:
einen Schritt (S102) des Aufhängens der oberen Sektion (10) über der unteren Sektion (12), während die untere Sektion (12) aufrecht angeordnet ist, sodass ein oberer Endabschnitt (13) der unteren Sektion (12) und ein unterer Endabschnitt (11) der oberen Sektion (10) einander zugewandt sind,
einen Schritt (S106) des Bewegens der oberen Sektion (10) zu der unteren Sektion (12) in einer Aufwärts-und-Abwärtsrichtung, um einen Zwischenraum (d_{g}) in der Aufwärts-und-Abwärtsrichtung zwischen dem unteren Endabschnitt (11) der oberen Sektion (10) und dem oberen Endabschnitt (13) der unteren Sektion (12) in einen vorbestimmten Bereich, der zum Schweißen geeignet ist, einzustellen, während ein vorstehender Abschnitt (14), der entweder an dem unteren Endabschnitt (11) der oberen Sektion (10) oder dem oberen Endabschnitt (13) der unteren Sektion (12) angeordnet ist, mit einem Aufnahmeabschnitt (16) in Eingriff gebracht wird, der an dem anderen von dem unteren Endabschnitt (11) der oberen Sektion (10) oder dem oberen Endabschnitt (13) der unteren Sektion (12) angeordnet ist, und
einen Schritt (S112) des Verbindens des unteren Endabschnitts (11) der oberen Sektion (10) und des oberen Endabschnitts (13) der unteren Sektion durch Schweißen.

2. Ein Verfahren zum Zusammenbauen eines Windturbinenturms (6) gemäß Anspruch 1,
wobei die untere Sektion (12) einen Ringflansch (20) aufweist, der sich entlang einer Umfangsrichtung des Windturbinenturms (6) so erstreckt, dass er von einer Innenumfangswandoberfläche (9) der unteren Sektion (12) in einer Radialrichtung des Windturbinenturms (6) nach innen vorsteht, und
wobei ein Abstandhalter (26) zwischen dem Ringflansch (20) und entweder dem vorstehenden Abschnitt (14) oder dem Aufnahmeabschnitt (16), der an dem oberen Abschnitt (10) angeordnet ist, eingefügt wird, sodass ein Gewicht bzw. eine Masse der oberen Sektion (10) durch den Ringflansch (20) der unteren Sektion (12) über den Abstandhalter (26) aufgenommen wird und der Zwischenraum (d_{g}) in dem vorbestimmten Bereich konstant gehalten wird.

3. Das Verfahren zum Zusammenbauen eines Windturbinenturms (6) gemäß Anspruch 1 oder 2, wobei der Zwischenraum (d_{g}) durch Betätigen eines ersten Aktuators (28) zum Aufwärtsdrücken entweder des vorstehenden Abschnitts (14) oder des Aufnahmeabschnitts (16), der an der oberen Sektion (10) angeordnet ist, eingestellt wird.

4. Das Verfahren zum Zusammenbauen eines Windturbinenturms (6) gemäß einem der Ansprüche 1 bis 3, wobei der Zwischenraum (d_{g}) durch Einstellen einer Dicke einer zwischen einen Bodenabschnitt (17) des Aufnahmeabschnitts (16) und einen Außenendabschnitt (15) des vorstehenden Abschnitts (14) einzusetzenden Beilage, eingestellt wird.

5. Das Verfahren zum Zusammenbauen eines Windturbinenturms (6) gemäß einem der Ansprüche 1 bis 4, ferner mit, nach dem Schritt (S106) des Einstellens des Zwischenraums (d_{g}) und vor dem Schritt (S112) des Verbindens, eines Schritts (S108) des Verringerns einer Fehlausrichtungsgröße (n) zwischen dem unteren Endabschnitt (11) der oberen Sektion (10) und dem oberen Endabschnitt (13) der unteren Sektion (12) in einer Radialrichtung des Windturbinenturms (6).

6. Das Verfahren zum Zusammenbauen eines Windturbinenturms (6) gemäß einem der Ansprüche 1 bis 5, ferner mit, nach dem Schritt (S106) des Einstellens des Zwischenraums (d_{g}) und vor dem Schritt (S112) des Verbindens, eines Schritts (S110) des Anordnens einer Verbindungslasche (34) an einer ersten Rippe (22), die an einer Innenumfangswandoberfläche (8) der oberen Sektion (10) so angeordnet ist, dass sie sich in der Aufwärts-und-Abwärtsrichtung erstreckt, und an einer zweiten Rippe (24), die an einer Innenumfangswandoberfläche (9) der unteren Sektion (12) so angeordnet ist, dass sie sich in der Aufwärts-und-Abwärtsrichtung erstreckt, und Befestigen der Verbindungslasche (34) an der ersten Rippe (22) und der zweiten Rippe (24).

7. Das Verfahren zum Zusammenbauen eines Windturbinenturms (6) gemäß einem der Ansprüche 1 bis 6,
wobei der vorstehende Abschnitt (14) sich zu einem Außenende (15) des vorstehenden Abschnitts (14) hin verjüngt bzw. schräg verläuft.

8. Das Verfahren zum Zusammenbauen eines Windturbinenturms (6) gemäß Anspruch 7,
wobei eine Seitenoberfläche des vorstehenden Abschnitts (14) eine gekrümmte Form (49) in einem Außenseitenendebereich besitzt, wo der vorstehende Abschnitt (14) sich zu dem Außenende (15) hin verjüngt.

9. Das Verfahren zum Zusammenbauen eines Windturbinenturms (6) gemäß einem der Ansprüche 1 bis 8,
wobei der Aufnahmeabschnitt (16) eine Einlassweite (Wi) zur Aufnahme des vorstehenden Abschnitts (14) besitzt, und die Einlassweite (Wi) zu einem Einlassende zunimmt.

10. Das Verfahren zum Zusammenbauen eines Windturbinenturms (6) gemäß einem der Ansprüche 1 bis 9,
wobei der vorstehende Abschnitt (14) und/oder der Aufnahmeabschnitt (16) mit einem Gleitmaterial (52,54) bedeckt ist, das einen kleineren Reibungskoeffizient besitzt als ein Bestandsmaterial des vorstehenden Abschnitts (14) und/oder des Aufnahmeabschnitts (16).

11. Das Verfahren zum Zusammenbauen eines Windturbinenturms (6) gemäß einem der Ansprüche 1 bis 10,
wobei der vorstehende Abschnitt (14) und/oder der Aufnahmeabschnitt (16) einen Ausschnittabschnitt (58) einer gekrümmten Form besitzt, der eine Öffnung zu einem Schweißverbindungsabschnitt (56) zwischen dem oberen Endabschnitt (13) und dem unteren Endabschnitt (11) zur Ausbildung einer Kehle (60) an dem Schweißverbindungsabschnitt (56) besitzt.

12. Das Verfahren zum Zusammenbauen eines Windturbinenturms (6) gemäß einem der Ansprüche 1 bis 11, ferner mit, vor dem Schritt (S106) des Einstellens des Zwischenraums (d_{g}), einem Schritt des Anwendens einer Kraft in einer Radialrichtung des Windturbinenturms (6) auf entweder den unteren Endabschnitt (11) der oberen Sektion (10) oder den oberen Endabschnitt (13) der unteren Sektion (12), so dass ein Durchmesser des jeweiligen unteren Endabschnitts (11) der oberen Sektion (10) oder des oberen Endabschnitts (13) der unteren Sektion (12) näher zu einem Durchmesser des jeweils anderen, des unteren Endabschnitts (11) der oberen Sektion (10) oder des oberen Endabschnitts (13) der unteren Sektion (12), in einer Radialrichtung gebracht wird.

13. Das Verfahren zum Zusammenbauen eines Windturbinenturms (6) gemäß einem der Ansprüche 1 bis 12, ferner mit, vor dem Schritt (S106) des Einstellens des Zwischenraums (d_{g}), einem Schritt des Herumdrehens der oberen Sektion (10) relativ zu der unteren Sektion (12), sodass eine Position des vorstehenden Abschnitts (14) dieselbe wird wie eine Position des Aufnahmeabschnitts (16) entsprechend dem vorstehenden Abschnitt (14) in einer Umfangsrichtung.

14. Das Verfahren zum Zusammenbauen eines Windturbinenturms (6) gemäß Anspruch 13, wobei ein Kettenblock an der oberen Sektion (10) angebracht ist oder wird und der Kettenblock verwendet wird, um die obere Sektion (10) relativ zu der unteren Sektion (12) zu drehen.

15. Das Verfahren zum Zusammenbauen eines Windturbinenturms (6) gemäß einem der Ansprüche 1 bis 14, wobei der Schritt (S112) des Verbindens ein Ausführen eines automatischen Schweißens entlang einer Schweißlinie zwischen dem oberen Endabschnitt (13) und dem unteren Endabschnitt (11) unter Verwendung einer automatischen Schweißmaschine umfasst.

## Revendications

1. Procédé d'assemblage d'une tour (6) d'éolienne, qui comprend une pluralité de tronçons (6a-d) de tour, incluant un tronçon (12) inférieur et un tronçon (10) supérieur, le procédé comprenant :
un stade (S102) de suspension du tronçon (10) supérieur au-dessus du tronçon (12) inférieur, alors que le tronçon (12) inférieur est mis debout de manière à ce qu'une partie (13) d'extrémité supérieure du tronçon (12) inférieur et une partie (11) d'extrémité inférieure du tronçon (10) supérieur se fassent face;
un stade (S106) de déplacement du tronçon (10) supérieur vers le tronçon (12) inférieur dans un sens vers le haut et vers le bas, pour régler un jeu (d_{g}) dans la direction vers le haut et vers le bas entre la partie (11) d'extrémité inférieure du tronçon (10) supérieur et la partie (13) d'extrémité supérieure du tronçon (12) inférieur, afin qu'il soit, dans une plage déterminée à l'avance, approprié au soudage, tandis qu'une partie (14) en saillie, disposée sur l'une, soit de la partie (11) d'extrémité inférieure du tronçon (10) supérieur, soit de la partie (13) d'extrémité supérieure du tronçon (12) inférieur, pénètre dans une partie (16) de réception disposée sur l'autre de la partie (11) d'extrémité inférieure du tronçon (10) supérieure ou de la partie (13) d'extrémité supérieure du tronçon (12) inférieur et
un stade (S112) de jonction de la partie (11) d'extrémité inférieure du tronçon (10) supérieure et de la partie (13) d'extrémité supérieure du tronçon (12) inférieur par soudage.

2. Procédé d'assemblage d'une tour (6) d'éolienne suivant la revendication 1,
dans lequel le tronçon (12) inférieur comprend une bride (20) annulaire, s'étendant dans une direction circonférentielle de la tour (6) d'éolienne, de manière à faire saillie d'une surface (9) de paroi périphérique intérieure du tronçon (12) inférieur vers l'intérieur, dans une direction radiale de la tour (6) d'éolienne et
dans lequel une entretoise (26) est interposée entre la bride (20) annulaire et l'une, soit de la partie (14) en saillie soit de la partie (16) de réception, disposée sur le tronçon (10) supérieur, de manière à ce qu'un poids du tronçon (10) supérieur soit reçu par la bride (20) annulaire du tronçon (12) inférieur, par l'intermédiaire de l'entretoise (26), et de manière à ce que le jeu (d_{g}) soit maintenu constant dans la plage déterminée à l'avance.

3. Procédé d'assemblage d'une tour (6) d'éolienne suivant la revendication 1 ou 2, dans lequel on règle le jeu (d_{g}) en faisant fonctionner un premier actionneur (28) pour pousser vers le haut l'une, soit de la partie 14 en saillie, soit de la partie (16) de réception, disposée sur le tronçon (10) supérieur.

4. Procédé d'assemblage d'une tour (6) d'éolienne suivant l'une quelconque des revendications 1 à 3, dans lequel on règle le jeu (d_{g}) en réglant une épaisseur d'une cale à insérer entre une partie (17) de fond de la partie (16) de réception et une partie (15) de bout de la partie (14) en saillie.

5. Procédé d'assemblage d'une tour (6) d'éolienne suivant l'une quelconque des revendications 1 à 4, comprenant, en outre, après le stade (S106) de réglage du jeu (d_{g}) et avant le stade (S112) de jonction, un stade (S108) de réduction d'un montant (m) de désalignement entre la partie (11) d'extrémité inférieure du tronçon (10) supérieur et la partie (13) d'extrémité supérieure du tronçon (12) inférieur, dans une direction radiale de la tour (6) d'éolienne.

6. Procédé d'assemblage d'une tour (6) d'éolienne suivant l'une quelconque des revendications 1 à 5, comprenant, en outre, après le stade (S106) de réglage du jeu (d_{G}) et avant le stade (S112) de jonction, un stade (S110) de placement d'une éclisse (34) sur une première nervure (22) disposée sur une surface (8) de paroi périphérique intérieure du tronçon (10) supérieur, de manière à ce qu'elle s'étende dans la direction vers le haut et vers le bas et sur une deuxième nervure (24) disposée sur une surface (9) de paroi périphérique intérieure du tronçon (12) inférieur, de manière à ce qu'elle s'étende dans la direction vers le haut et vers le bas, et de fixation de l'éclisse (34) à la première nervure (22) et à la deuxième nervure (24).

7. Procédé d'assemblage d'une tour (6) d'éolienne suivant l'une quelconque des revendications 1 à 6,
dans lequel la partie (14) en saillie se rétrécit vers un bout (15) de la partie (14) en saillie.

8. Procédé d'assemblage d'une tour (6) d'éolienne suivant la revendication 7,
dans lequel une surface latérale de la partie (14) en saillie a une forme (49) incurvée dans une région du côté du bout où la partie (14) en saillie se rétrécit vers le bout (15) .

9. Procédé d'assemblage d'une tour (6) d'éolienne suivant l'une quelconque des revendications 1 à 8,
dans lequel la partie (16) de réception a une largeur (Wi) d'entrée pour recevoir la partie (14) en saillie et la largeur (Wi) d'entrée augmente vers l'extrémité d'entrée.

10. Procédé d'assemblage d'une tour (6) d'éolienne suivant l'une quelconque des revendications 1 à 9,
dans lequel au moins l'une de la partie (14) en saillie ou de la partie (16) de réception est recouverte d'un matériau (52, 54) de glissement, qui a un coefficient de frottement plus petit qu'un matériau constitutif de la au moins une de la partie (14) en saillie ou de la partie (16) de réception.

11. Procédé d'assemblage d'une tour (6) d'éolienne suivant l'une quelconque des revendications 1 à 10,
dans lequel au moins l'une de la partie (14) en saillie ou de la partie (16) de réception a une partie (58) découpée, de forme incurvée, qui a une ouverture vers une partie (56) de joint soudé, entre la partie (13) d'extrémité supérieure et la partie (11) d'extrémité inférieure, pour former un congé (60) à la partie (56) de joint soudé.

12. Procédé d'assemblage d'une tour (6) d'éolienne suivant l'une quelconque des revendications 1 à 11, comprenant, en outre, avant le stade (S106) de réglage du jeu (d_{g}), un stade d'application d'une force dans une direction radiale de la tour (6) d'éolienne à l'une, soit de la partie (11) d'extrémité inférieure du tronçon (10) supérieur, soit de la partie (13) d'extrémité supérieure du tronçon (12) inférieur, de manière à changer un diamètre de l'une, soit de la partie (11) d'extrémité inférieure du tronçon (10) supérieur, soit de la partie (13) d'extrémité supérieure du tronçon (12) inférieur, pour qu'il se rapproche d'un diamètre de l'autre de la partie (11) d'extrémité inférieure du tronçon (10) supérieur ou de la partie (13) d'extrémité supérieure du tronçon (12) inférieur dans la direction radiale.

13. Procédé d'assemblage d'une tour (6) d'éolienne suivant l'une quelconque des revendications 1 à 12, comprenant, en outre, avant le stade (S106) de réglage du jeu (d_{g}), un stade de rotation du tronçon (10) supérieur par rapport au tronçon (12) inférieur, de manière à ce qu'une position de la partie (14) en saillie devienne la même qu'une position de la partie (16) de réception correspondant à la partie (14) en saillie dans une direction circonférentielle.

14. Procédé d'assemblage d'une tour (6) d'éolienne suivant la revendication 13, dans lequel un palan à chaîne est monté sur le tronçon (10) supérieur et on utilise le palan à chaîne pour faire tourner le tronçon (10) supérieur par rapport au tronçon (12) inférieur.

15. Procédé d'assemblage d'une tour (6) d'éolienne suivant l'une quelconque des revendications 1 à 14, dans lequel le stade (S112) de jonction comprend effectuer un soudage automatique le long d'une ligne de soudure entre la partie (13) d'extrémité supérieure et la partie (11) d'extrémité inférieure en utilisant une machine à souder automatique.
